# EUROPEAN PATENT SPECIFICATION

(11) **EP 4 078 622 B1**
(45) Date of publication and mention of the grant of the patent: **16.10.2024**
(21) Application number: 20833771.7
(22) Date of filing: 15.12.2020
(51) Int. Cl.: G21B 1/05, H01F 6/06

(54) **TOKAMAK WITH INBOARD SHAPING USING A MODIFIED SOLENOID**
TOKAMAK MIT INNENFORMUNG UNTER VERWENDUNG EINES MODIFIZIERTEN SOLENOIDS
TOKAMAK AVEC MISE EN FORME INTERNE AU MOYEN D'UN SOLÉNOÏDE MODIFIÉ

(30) Priority: 17.12.2019 GB 201918588
(43) Date of publication of application: 26.10.2022
(73) Proprietor: Tokamak Energy Ltd, Abingdon, Oxfordshire OX14 4SD (GB)
(72) Inventor: BUXTON, Peter, Abingdon, Oxfordshire OX14 3DB (GB)
(74) Representative: Marks & Clerk LLP
(86) International application number: PCT/EP2020/086207
(87) International publication number: WO 2021/122588

(56) References cited:
- WO-A1-2019/150098
- JP-A- 2006 317 400
- JP-A- 2007 033 144
- US-A1- 2013 089 171

## Description

### Field of the Invention

The present invention relates to tokamaks (toroidal magnetic confinement plasma chambers). In particular, the invention relates to solenoids for use in a tokamak, and to a tokamak comprising such a solenoid.

### Background

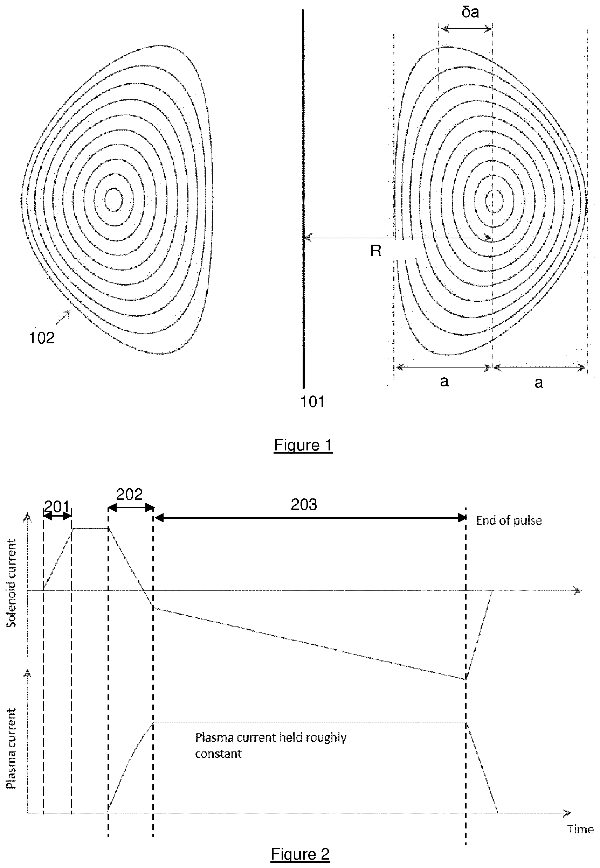

In a tokamak, plasma performance and stability is strongly affected by the shape of the plasma. Figure 1 is a diagram showing some key plasma shaping parameters. The major radius R is the distance between the axis of symmetry 101 of the toroidal plasma 102 and the centre of the plasma cross section. The minor radius a is the distance between the centre of the plasma cross section and the radially outer or inner extent of the plasma envelope (separatrix), or equivalently, half the maximum radial extent of the plasma envelope. The triangularity δ is the ratio between the minor radius a, and the radial distance δa between the centre of the plasma cross section and the highest vertical point of the plasma.

The triangularity of a plasma affects its stability, in particular the "ballooning stability", which must be maintained in order to have a stable plasma. As such, control of plasma shape and in particular triangularity is important in sustaining plasmas within a tokamak.

Many tokamaks will comprise a solenoid as part of the central column. The solenoid may be used in plasma initiation, but the main purpose is to drive plasma current. The solenoid acts as the primary coil in a transformer for which the plasma is the secondary coil, and as such changes in the current of the solenoid will induce changes in the current of the plasma. Figure 2 is a graph of solenoid and plasma currents during a typical discharge. In period 201, the solenoid is ramped up to full current before the plasma is initiated, and then, in period 202, once the plasma is formed the solenoid is used to drive the plasma current up to the operating value. The solenoid is then used, in period 203, to maintain a constant plasma current during the discharge (in coordination with a control system, which will vary the solenoid current based on measured properties of the plasma to obtain a steady plasma current).

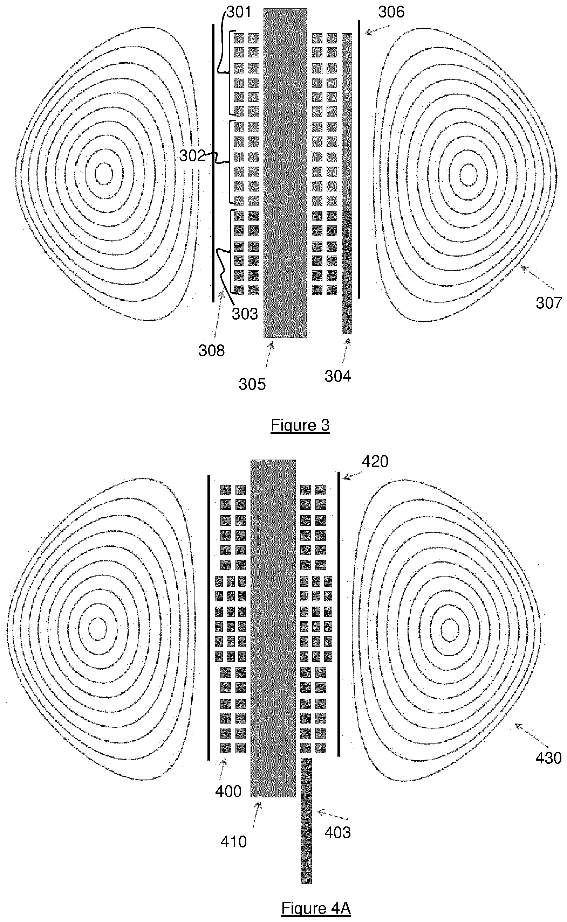

In order to use the solenoid to affect the triangularity of the plasma, some tokamak's have a "split solenoid", as illustrated in Figure 3. The central column comprises three solenoids 301, 302, 303, having separate "tails" 304 for current input and output, which can be controlled independently. The solenoids are wrapped around the part of the toroidal field (TF) magnet 305 which passes through the central column, between the TF magnet and the vacuum vessel 306. By varying the relative currents between the central solenoid 302 and the outer solenoids 301, 303, the triangularity δ of the plasma 307 can be adjusted, while still allowing the solenoid to perform its main role in maintaining the plasma current.

Tokamaks with a split solenoid will require lower poloidal field (PF) coil currents when compared to equivalent tokamaks without a split solenoid, in order to maintain the plasma shape to a similar degree. Higher PF coil currents are undesirable for a number of reasons, such as higher forces on the PF coils, higher current density (requiring more conductor, or pushing superconducting elements closer to their critical current), and higher temperature rise in resistive conductors.

However, a split solenoid takes up more space within the central column of the tokamak (i.e. within the hole through the centre of the toroidal vacuum vessel) than a standard solenoid. In particular, the "tails" must add to the thickness of the solenoid on one side only, which results in wasted space 308 around the rest of the circumference of the central column. This is a relatively minor issue for large tokamaks, but for smaller tokamak plasma chambers, especially for spherical tokamaks, the radius of the central column is a key design consideration, and minimising this radius results in significantly improved performance.

There is therefore a need for a solenoid design which provides at least some of the advantages of a split solenoid, while mitigating the disadvantage of increased central column radius.

JP2007033144A discloses a tokamak having a solenoid with variable winding density in one of its layers.

### Summary

According to the invention, there is provided a tokamak according to claim 1. The tokamak comprises a vacuum chamber, a toroidal field coil, and a solenoid. The solenoid is wound around the toroidal field coil within a central column region of the tokamak. The solenoid comprises an inner portion and two outer portions. The inner portion comprises windings extending axially for a first distance either side of the midpoint of the length of the solenoid. The outer portions, each comprise windings extending axially from an end of the inner portion. The inner portion has a number of turns per unit length which is greater than a number of turns per unit length of the outer portion. A number of layers of windings in the inner portion is greater than a number of layers of windings in each outer portion.

Further embodiments are defined in claim 2 *et seq.*

### Brief Description of the Drawings

Figure 1 is a diagram of certain plasma parameters of a tokamak;
Figure 2 is a graph showing solenoid current and plasma current before and during a plasma discharge in a tokamak;
Figure 3 is a schematic illustration of a tokamak comprising a split solenoid according to the prior art;
Figure 4A is a schematic illustration of a tokamak comprising an exemplary solenoid; and
Figure 4B is a close up of the solenoid of Figure 4A.

### Detailed Description

Figure 4A shows an exemplar tokamak incorporating an alternative solenoid. The tokamak comprises a TF coil 410, a vacuum vessel 420 (only the central part of each shown), and is configured to contain a plasma 430. The tokamak also comprises a solenoid 400 located between the TF coil 410 and the vacuum vessel 420.

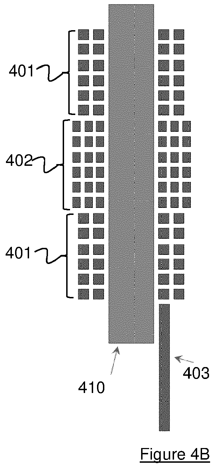

Alternatively, the solenoid may be wound radially inward of the TF coil segments in the central column. The solenoid 400 is shown alone in Figure 4B, and comprises outer portions 401, an inner portion 402, and tails 403. The tails 403 connect the solenoid to a power supply (not shown).

The solenoid is wound such that the inner portion 402, which is closest to the mid-plane of the solenoid, has a greater number of turns per unit length than the outer portion 401. For example, as shown in Figure 4, the inner portion may be wound with the turns in three layers, and the outer portions may be wound with the turns in two layers (with the turns in each layer being equally spaced along the solenoid). To reduce the impact of the additional layer of turns on the thickness of the central column, the turns in the inner portion 402 may be made from thinner conductor than the turns of the outer portion. This will result in greater resistive heating at the inner portion, compared to an equivalent solenoid with the same thickness of conductor throughout.

The above construction provides many of the advantages of a "split solenoid", without the need to run tails up a substantial portion of the length of the solenoid. In fact, the tails can be arranged such that they do not extend further outward than the solenoid while within the central column.

While the above example has two types of solenoid portions (inner, and outer portions), with two or three layers respectively, it will be appreciated that other arrangements are possible. For example, the solenoid may have any number of types of portions, arranged such that portions closer to the mid plane of the tokamak (i.e. the half way point along the length of the solenoid) have a greater number of turns per unit length that portions further from the mid-plane of the tokamak. In such an instance, the different number of turns per unit length may be achieved by a different number of layers, as previously described, and the thickness of the conductors may be reduced in portions with a greater number of turns (and vice versa).

The number of turns per unit length in each portion will be dependent on the field profile required to achieve the desired triangularity, and will vary depending on other properties of the tokamak in a way that can be determined by simulation as known in the art.

The solenoid may be formed from high temperature superconductor, HTS, tapes, which each turn of the solenoid comprising a plurality of HTS tapes. One attractive option is to form the turns as a plurality of stacked HTS tapes, oriented such that the plane of the HTS layer of each tape is vertical and tangential to the central column (i.e. the HTS layer faces radially inwards or outwards). In this case, the HTS tapes will be broadly aligned with the magnetic field over the whole solenoid, but particularly well aligned in the inner portion(s). As such, the number of HTS tapes in each turn may be reduced in the inner portions, as each HTS tape will have a greater critical current - thereby achieving the reduced thickness for the turns of the inner portions as described above.

During operation of the tokamak, some additional control of triangularity via the PF coils may be required (when compared to operation with a split solenoid), but the currents needed in the PF coils will still be considerably less than required in an equivalent tokamak with a standard solenoid.

## Claims

1. A tokamak comprising a vacuum chamber (420), a toroidal field coil, and a solenoid (400) wherein the solenoid is wound within a central column region of the tokamak;
the solenoid comprising:
an inner portion (402) comprising windings extending axially for a first distance either side of the midpoint of the length of the solenoid; and
two outer portions (401), each comprising windings extending axially from an end of the inner portion;
wherein the inner portion has a number of turns per unit length which is greater than a number of turns per unit length of the outer portion;
**characterised in that** a number of layers of windings in the inner portion is greater than a number of layers of windings in each outer portion.

2. A tokamak according to claim 1, wherein the windings of the inner portion are formed from a conductor having a first cross section, and the windings of each outer portion are formed from a conductor having a second cross section, and wherein the first cross section has a radial thickness which is less than the radial thickness of the second cross section.

3. A tokamak according to any preceding claim wherein the solenoid comprises a plurality of axially arranged portions, the plurality of portions including the inner and outer portions, and wherein each portion has a different number of turns per unit length, with the number of turns per unit length of each portion being greater for portions closer to the midpoint of the solenoid, and vice versa.

4. A tokamak according to any preceding claim wherein the solenoid is wound around the toroidal field coil.

5. A tokamak according to any of claims 1 to 3, wherein the solenoid is wound radially inward of the toroidal field coil in the central column region.

6. A tokamak according to any preceding claim, wherein the windings of the solenoid comprise high temperature superconducting, HTS, tapes.

7. A tokamak according to claim 6, wherein the windings of the solenoid comprise HTS tapes arranged in stacks, and each HTS tape is aligned such that an HTS layer of the HTS tape faces radially inward or outwards.

8. A tokamak according to claim 7, wherein the stacks of HTS tapes in the inner portion comprise fewer HTS tapes than the stacks of HTS tapes in the outer portions.

## Patentansprüche

1. Tokamak, umfassend eine Vakuumkammer (420), eine toroidale Feldspule und eine Magnetspule (400), wobei die Magnetspule innerhalb eines zentralen Säulenbereichs des Tokamaks gewickelt ist;
wobei die Magnetspule Folgendes umfasst:
einen inneren Abschnitt (402), der Wicklungen umfasst, die sich axial über eine erste Entfernung auf beiden Seiten des Mittelpunkts der Länge der Magnetspule erstrecken; und
zwei äußere Abschnitte (401), die jeweils Wicklungen umfassen, die sich axial von einem Ende des inneren Abschnitts aus erstrecken;
wobei der innere Abschnitt eine Anzahl von Windungen pro Längeneinheit aufweist, die größer ist als eine Anzahl von Windungen pro Längeneinheit des äußeren Abschnitts;
**dadurch gekennzeichnet, dass** eine Anzahl von Lagen von Wicklungen in dem inneren Abschnitt größer ist als eine Anzahl von Lagen von Wicklungen in jedem äußeren Abschnitt.

2. Tokamak nach Anspruch 1, wobei die Wicklungen des inneren Abschnitts aus einem Leiter mit einem ersten Querschnitt gebildet sind, und die Wicklungen jedes äußeren Abschnitts aus einem Leiter mit einem zweiten Querschnitt gebildet sind, und wobei der erste Querschnitt eine radiale Dicke aufweist, die geringer ist als die radiale Dicke des zweiten Querschnitts.

3. Tokamak nach einem der vorhergehenden Ansprüche, wobei die Magnetspule eine Vielzahl von axial angeordneten Abschnitten umfasst, wobei die Vielzahl von Abschnitten den inneren und die äußeren Abschnitte einschließt, und wobei jeder Abschnitt eine unterschiedliche Anzahl von Windungen pro Längeneinheit aufweist, wobei die Anzahl von Windungen pro Längeneinheit jedes Abschnitts größer bei Abschnitten ist, die näher am Mittelpunkt der Magnetspule liegen, und umgekehrt.

4. Tokamak nach einem der vorhergehenden Ansprüche, wobei die Magnetspule um die toroidale Feldspule gewickelt ist.

5. Tokamak nach einem der Ansprüche 1 bis 3, wobei die Magnetspule im zentralen Säulenbereich radial einwärts von der toroidalen Feldspule gewickelt ist.

6. Tokamak nach einem der vorhergehenden Ansprüche, wobei die Wicklungen der Magnetspule hochtemperatursupraleitende, HTS-, Bänder umfassen.

7. Tokamak nach Anspruch 6, wobei die Wicklungen der Magnetspule HTS-Bänder umfassen, die in Stapeln angeordnet sind, und jedes HTS-Band derart ausgerichtet ist, dass eine HTS-Lage des HTS-Bandes radial einwärts oder auswärts gewandt ist.

8. Tokamak nach Anspruch 7, wobei die Stapel von HTS-Bändern in dem inneren Abschnitt weniger HTS-Bänder umfassen als die Stapel von HTS-Bändern in den äußeren Abschnitten.

## Revendications

1. Tokamak comprenant une chambre à vide (420), une bobine de champ toroïdal et un solénoïde (400), ledit solénoïde étant enroulé dans une région de colonne centrale du tokamak ;
le solénoïde comprenant :
une partie intérieure (402) comprenant des enroulements s'étendant axialement sur une première distance de chaque côté du point médian de la longueur du solénoïde ; et
deux parties extérieures (401) comprenant chacune des enroulements s'étendant axialement à partir d'une extrémité de la partie intérieure ;
ladite partie intérieure ayant un nombre de tours par unité de longueur qui est supérieur à un nombre de tours par unité de longueur de la partie extérieure ;
**caractérisé en ce qu'**un nombre de couches d'enroulements dans la partie intérieure est supérieur à un nombre de couches d'enroulements dans chaque partie extérieure.

2. Tokamak selon la revendication 1, dans lequel les enroulements de la partie intérieure sont formés à partir d'un conducteur ayant une première section transversale, et les enroulements de chaque partie extérieure sont formés à partir d'un conducteur ayant une deuxième section transversale, et dans lequel la première section transversale a une épaisseur radiale inférieure à l'épaisseur radiale de la deuxième section transversale.

3. Tokamak selon l'une quelconque des revendications précédentes, dans lequel le solénoïde comprend une pluralité de parties agencées axialement, la pluralité de parties incluant la partie intérieure et les parties extérieures, et dans lequel chaque partie a un nombre différent de tours par unité de longueur, le nombre de tours par unité de longueur de chaque partie étant supérieur pour les parties plus proches du point médian du solénoïde, et vice versa.

4. Tokamak selon l'une quelconque des revendications précédentes, dans lequel le solénoïde est enroulé autour de la bobine de champ toroïdal.

5. Tokamak selon l'une quelconque des revendications 1 à 3, dans lequel le solénoïde est enroulé radialement vers l'intérieur de la bobine de champ toroïdal dans la région de colonne centrale.

6. Tokamak selon l'une quelconque des revendications précédentes, dans lequel les enroulements du solénoïde comprennent des bandes supraconductrices à haute température, SHT.

7. Tokamak selon la revendication 6, dans lequel les enroulements du solénoïde comprennent des bandes SHT agencées en piles, et chaque bande SHT est alignée de façon qu'une couche SHT de la bande SHT est tournée radialement vers l'intérieur ou vers l'extérieur.

8. Tokamak selon la revendication 7, dans lequel les piles de bandes SHT dans la partie intérieure comprennent moins de bandes SHT que les piles de bandes SHT dans les parties extérieures.
